# EUROPEAN PATENT APPLICATION

(11) **EP 4 156 423 A1**
(43) Date of publication of application: **29.03.2023**
(21) Application number: 21199345.6
(22) Date of filing: 28.09.2021
(51) Int. Cl.: H01S 3/094, H01S 3/04, H01S 3/06, H01S 3/0941, H01S 3/042, H01S 3/08, H01S 3/23

(54) **HIGH-POWER COMPACT SOLID-STATE SLAB LASER AMPLIFIER**

(71) Applicant: CSEM Centre Suisse d'Electronique et de Microtechnique SA - Recherche et Développement, 2002 Neuchâtel (CH)
(72) Inventor: Lecomte, Steve, 1233 Bernex (CH); Hofer, Christoph, 8303 Bassersdorf (CH); Portuondo-Campa, Erwin, 1400 Yverdon-les-Bains (CH)
(74) Representative: P&TS SA (AG, Ltd.)

(57) **Abstract**

A laser amplifier device comprising an amplification element which comprises a solid-state gain medium including a first main face and a second main face separated from each other by a distance which is smaller than the lateral dimensions. A heat spreader is thermally connected to, and substantially covering, the first main face. The heat spreader is optically transparent to a pump light and is in thermal contact with a heat sink. A first reflector substantially covers and faces said first main face and a second reflector substantially covers and faces the second main face; said reflectors being configured to reflect the pump light. The heat spreader and the first reflector are arranged such that the pump light passes through the heat spreader and through the first reflector and is reflected multiple times across the amplification element, between the first and second reflectors.

## Description

### Technical domain

The present invention is in the field of high-power laser amplifiers. More specifically, it concerns solid-state laser amplifiers of the slab type.

### Related art

Slab laser amplifiers constitute a class of solid-state laser amplifiers characterized by a gain medium having the form of a slab, with one dimension being substantially smaller than the other dimensions. In a slab amplifier, the laser signal which is amplified propagates inside the gain medium, substantially parallel to the slab plane, often performing a zig-zag path inside the slab and achieving significant amplification.

Slab laser amplifiers are particularly well suited for high-power applications, since the geometry of the gain medium, featuring a large surface relative to its volume, allows for an efficient heat extraction. This feature together with the compactness, mechanical robustness and high gain characteristics of this technology makes it particularly attractive for industrial applications.

Slab amplifiers can be classified according to the pumping geometry in two main categories: face-pumped, when the pump light is provided through the main (large) faces of the slab, and edge-pumped, when the pump light is provided through the narrow faces of the slab. Face pumping is particularly well adapted for lamp pumping systems, which used to be the standard technology a few decades ago. Typically, the slab would be cooled by a pump-transparent refrigerating liquid, directly in contact with the gain medium. More recently, with the emergence of high-power laser diodes, the edge-pumping scheme has become the gold standard. Indeed, the good spatial coherence of laser diodes allows an efficient injection of the pump radiation through the narrow edges of the slab. The large faces of the slab are thus available for heat extraction through a solid heat sink, typically a cooled copper mount. This has important advantages in terms of compactness and simplicity of the assembly, compared to direct liquid cooling of the gain medium.

Face-pumping of slab amplifiers based in diode laser pumping has been also proposed, for example in US2014211301A, the pump is provided through one face of the slab, whereas the opposite face is used for heat extraction through a heat sink. In this scheme, only one of the two large faces of the slab is available for heat extraction, whereas the other one is available for pump entry. This "single-side" limitation can be critical when dealing with high power amplification, above some hundreds of Watts of pump power.

Another reason why edge-pumping schemes are more often implemented than face-pumping concerns the optical path of the pump across the gain medium. In order to achieve high pump absorption, thus high gain, the path of the pump within the gain medium must be maximized. If the pump is simply launched perpendicular to the thin slab plane, only a small fraction of it may be absorbed and contribute to the amplification of the laser signal. In an edge-pumping configuration, the pump is launched along the plane of the slab and can be efficiently absorbed.

Despite these advantages, edge-pumping schemes also present drawbacks with respect to face-pumping. In edge-pumping schemes not only the seed, but also the pump beam must be carefully aligned across the slab geometry. Many prior art documents deal with schemes for simplifying the issue of pump alignment into slab laser amplifiers. For example, in US6094297A the pump beam is provided at the end of the slab, perpendicular to its plane like in a face pumping scheme, but it is internally reflected along the slab plane by end mirrors provided at an angle of 45°. Within the slab, the pump then propagates harnessed by total internal reflection, as it is often implemented in edge-pumping configurations.

Another disadvantage of the edge-pumping schemes is the uneven absorption of the pump across the gain medium. Close to the entry side, the pump intensity is more important than towards the center or opposite edge of the slab. This may lead to an inhomogeneous gain profile across the slab with possible thermal gradients and thermal lensing effects which may result in the distortion of the seed beam in the amplifier.

There is thus a need for a solution featuring the simplicity of assembly and alignment of a face-pumped slab amplifier, without running into the problems known from the prior art; namely, the limited available surface for heat extraction, and the loss of pump power due to a short optical path of the pump through the absorbing gain medium.

### Summary

An aim of the present invention is to provide a face-pumped solid-state slab laser amplifier which overcomes the problems of the prior art. To this end, a laser amplifier device is disclosed here comprising an amplification element, which comprises a gain medium where a laser signal can be amplified. Said amplification element comprises a first and a second main faces, separated from each other by a distance which is smaller than their lateral dimensions.

According to the invention, the laser amplifier further comprises a solid-state heat spreader thermally connected to the first main face of the amplification element and substantially covering the surface of said first main face. Said heat spreader is optically transparent to a pump light being able to optically excite the gain medium of the amplification element. Said heat spreader features a good thermal conductivity and is also in thermal contact with a heat sink of the laser amplifier.

According to the invention, the laser amplifier further comprises a first reflector substantially covering and facing the first main face of the amplification element, and a second reflector substantially covering and facing the second main face of the amplification element; said reflectors being able to reflect the pump light for at least a range of incidence angles.

More particularly, the laser amplifier device of the invention is characterized by the fact that when the pump light is directed into the amplification element, it passes through the transparent heat spreader and through the first reflector. Furthermore, the first and second reflectors are configured to produce multiple reflections of said pump light across the amplification element, between the first and second reflectors.

According to an advantageous embodiment, the amplification element of the laser amplifier device may comprise a gain medium layer, sandwiched between two surrounding layers; the gain medium layer constituting the gain medium of the amplification element, and the surrounding layers being made from a transparent material approximately matching the index of refraction of the gain medium layer.

In such embodiment, the gain medium layer may advantageously feature a thickness between 100 µm and 3 mm; preferably, between 200 µm and 300 µm, whereas each of the two surrounding layers may present a thickness between 200 µm and 1 mm, preferably between 200 µm and 300 µm.

Also, in such advantageous embodiment, the gain medium layer, may comprise a doped ceramic or crystalline material, whereas the surrounding layers may comprise the same undoped ceramic or crystalline material.

In particular, said doped ceramic or crystalline material of the gain medium may comprise Yb-doped YAG, whereas the ceramic or crystalline material of the other two layers may comprise undoped YAG.

In one advantageous embodiment, the heat spreader of the laser amplifier device may be made of a material comprising diamond or sapphire.

Generally, the first reflector of the laser amplifier device of the invention does not necessarily have to be in physical contact with either the amplification element, or the heat spreader. It may be advantageously provided as an independent element, either a self-standing part of the system, or fixed on another part.

In another aspect related to a preferred embodiment, the first reflector of the laser amplifier device may comprise an array of small apertures allowing the passage of a corresponding array of locally spatially confined pump beams into the amplification element.

In that case, the first reflector may comprise a substrate comprising an array of tap-holes defining said array of small apertures and coated on at least one side with a reflective coating.

Alternatively, in such preferred embodiment, the first reflector may comprise a transparent substrate, comprising a patterned highly reflective coating defining said array of small apertures.

In one alternative embodiment, the pump light for the laser amplifier device may comprise a collimated beam, oriented relative to the laser amplifier device such as to provide a predetermined angle of entrance of the collimated beam into the amplification element. In this embodiment, the second reflector is configured making a non-zero reflector angle relative to the first reflector, such that the multiple reflections across the amplification element occur at other angles of incidence different from the predetermined angle of entrance. In this embodiment, the first reflector comprises a dielectric angle-dependent optical coating having transmitting properties for the collimated beam at the predetermined angle of entrance, and having reflective properties for the collimated beam at the different angles of incidence of the multiple reflections.

In another alternative embodiment, the laser amplifier device according to the invention may further comprise a second solid-state heat spreader thermally connected to the second main face of the amplification element and substantially covering the surface of said second main face. In such embodiment, the second heat spreader is also in contact with a heat sink and is optically transparent to the pump light, such that additional pump light can be further directed into the amplification element through the second heat spreader and through the second reflector of the laser amplifier device. This advantageously results in a symmetric device, where both main faces of the amplification element are used for optical pumping and heat extraction, simultaneously.

The present invention further relates to a system comprising a laser amplifier device as described in the previous paragraphs, and a light source configured to generate a pump light adapted to optically excite the gain medium of the amplification element of the laser amplifier device. In one aspect of such system, the pump light is provided to the laser amplifier device, substantially covering the surface of its first main face.

In one preferred embodiment of such system, the light source is configured to generate an array of locally spatially confined pump beams and the first reflector comprises an array of small apertures configured to allow the passage of said array of locally spatially confined pump beams into the amplification element.

According to one example of such preferred embodiment, the light source may comprise an array of optical fibers, each optical fiber comprising an output face emitting one of the locally spatially confined pump beams, and each output face being aligned in front of each of said small apertures.

According to another example of such preferred embodiment, the light source may comprise an array of micro-lenses generating the array of locally spatially confined pump beams, the array of micro-lenses being arranged to focus said locally spatially confined pump beams into said small apertures.

In an alternative embodiment of a system according to the invention, the light source may be configured to generate a collimated beam of pump light.

In another alternative embodiment of the laser amplifier device according to the invention, the first reflector may comprise a dielectric angle-dependent optical coating featuring reflecting or transmitting properties for the pump light according to the angle of incidence.

### Short description of the drawings

Further details of the invention will appear more clearly upon reading the description below, in connection with the following figures which illustrate:
Fig. 1: a schematic representation of a possible embodiment of a laser amplifier device according to the present invention,
Fig. 2: an aspect of a possible embodiment of the laser amplifier device,
Fig. 3: a schematic representation of a possible embodiment of a system according to the present invention,
Fig. 4: another possible embodiment of such system,
Fig. 5: two alternative possible embodiments of a reflector of the present invention,
Fig. 6: a schematic representation of another possible embodiment of a laser amplifier device according to the present invention,
Fig. 7: a possible embodiment of an amplification element of the present invention,
Fig. 8: a schematic representation of another possible embodiment of a laser amplifier device according to the present invention,
Fig. 9: a schematic representation of another possible embodiment of a laser amplifier device according to the present invention,
Fig. 10: a schematic representation of another possible embodiment of a laser amplifier device according to the present invention,

### Examples of embodiments

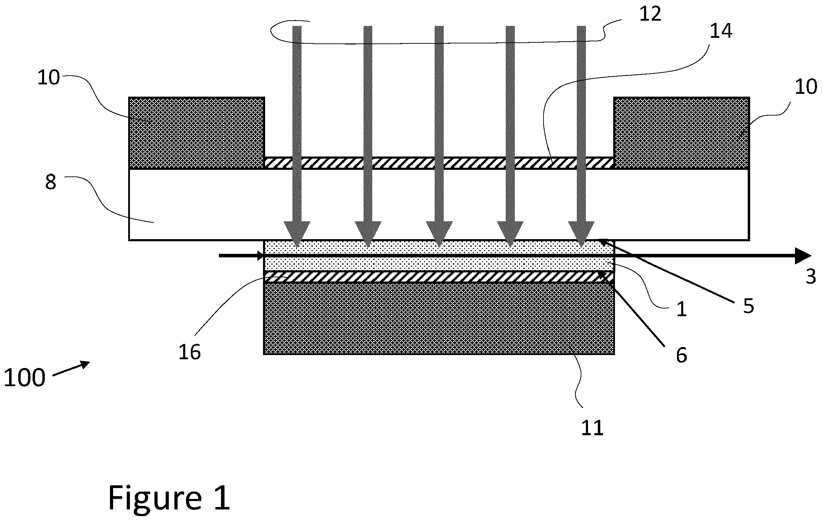

Figure 1 schematically represents a cross section of a laser amplifier device 100 according to one embodiment of the present invention. The amplifier comprises an amplification element 1, comprising a gain medium where a laser signal 3 propagates and is amplified. The amplification element 1 has the form of a slab, having two main (large), opposed faces 5, 6, which are parallel in the example of Fig. 1, and perpendicular to the plane of the figure. Although Fig. 1 is not represented at scale, it is understood that the distance between the two main faces 5, 6 is significantly smaller than the lateral dimensions of the slab.

As known from the state of the art, the laser signal 3 may propagate within the amplification element 1 following a zig-zag path to maximize the interaction length with the gain medium, therefore maximizing the process of optical amplification. The zig-zag path may be implemented by multiple reflections of the laser signal 3 on external mirrors (not shown in Fig. 1), or multiple reflections of the laser signal 3 on the narrow edge faces of the slab-shaped amplification element 1 (not shown in Fig. 1).

The amplification element 1 is thermally connected to a heat spreader 8, enabling heat transfer from the amplification element 1 to the heat spreader 8. The thermal contact is provided through the first main face 5 of the amplification element 1. The contact surface between the amplification element 1 and the heat spreader 8, substantially covers the whole area of said first main face 5, at least over the region where the amplification element 1 is optically pumped.

The thermal contact between the amplification element 1 and the heat spreader 8 is achieved by intimate mechanical contact over the surfaces. The surfaces can be either directly contacted or bonded. Either the amplification element 1 or the heat spreader 8, or both parts may be provided with a coating having specific optical or mechanical or chemical properties extending along the surface of contact 5. Also, a thin layer of adhesive may be applied between the two parts to provide the mechanical bond and the heat transfer function.

According to one aspect of the invention, the heat spreader 8 is made of an optically transparent material for the wavelength of a pump light 12 used to excite the gain medium of the amplification element 1. A face-pumping scheme of the slab is implemented by transmitting the pump light 12 through the heat spreader 8 onto the main face 5 of the amplification element 1.

Advantageously, according to one aspect of the present invention, the pump light 12 is distributed along substantially the whole surface of the main face 5 of the amplification element 1. In terms of optical pumping, this enables the delivery of very high optical powers into the amplifier without implementing an extreme focussing of the pump light into the entry faces of the slab, as happens in edge-pumping schemes. At the same time, the distribution of the incident pump light 12 across the large surface 5 of the amplification element 1, results in a higher homogeneity of the available pump energy across the whole volume of the gain medium, than can be obtained in other configurations.

Examples of suitable materials for the heat spreader 8 can be: diamond or sapphire.

As shown in Fig. 1, the heat spreader 8 may extend beyond the size of the amplification element 1 to be thermally connected to a heat sink 10, which can be for example, an actively cooled copper structure. In this way, the heat spreader 8 acts as a thermal bridge between the amplification element 1 and an active cooling system of the laser amplifier device 100. The heat sink 10 will generally not be a transparent structure and must therefore be spatially arranged in a manner that leaves a clear aperture on the heat spreader 8 for the transmission of the pump light 12 into the amplification element 1.

Further heat extraction from the system may be provided by an additional heat sink 11, thermally connected to the amplification element 1 through the second main face 6 of the amplification element 1.

Given the thin geometry of the amplification element 1, the pump light 12 traveling in a direction perpendicular to the main faces 5, 6 undergoes a rather short interaction with the gain medium in a single passage through the amplification element 1. This can result in limited absorption of the pump 12 by the gain medium and hence to low efficiency. This problem is solved by the provision of two reflectors 14, 16, disposed on both sides of the amplification element 1, substantially covering the main faces 5, 6 of the amplification element 1. As will be explained in greater details in the following paragraphs, the two reflectors 14, 16 produce multiple reflections of the pump light 12 and therefore, multiple passages of the pump light 12 through the amplification element 1, ensuring high pump absorption. The reflectors 14, 16 act thus as an optical trap, enabling an efficient absorption of the pump energy by the gain medium.

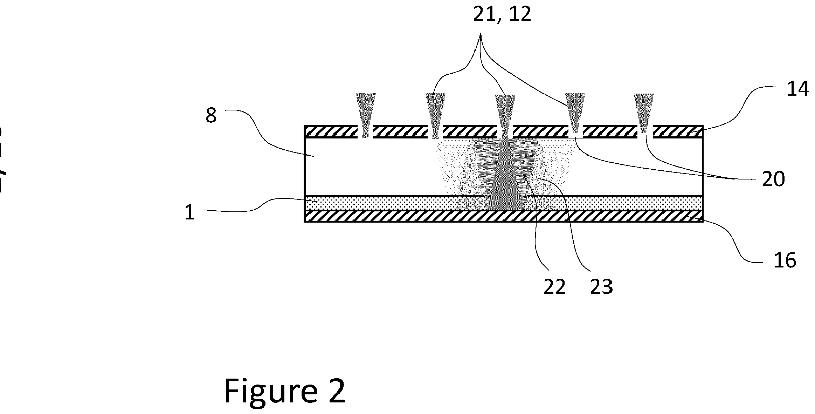

Obviously, the configuration of the reflectors 14 and 16 requires that the pump light 12 enters the space between the two reflectors before undergoing multiple reflections. Several strategies may be implemented to permit this entrance of the pump light 12 through the first reflector 14, before getting trapped in multiple reflections. One of these strategies is depicted in Fig. 2.

Figure 2 shows details of a possible configuration of the reflectors 14, 16. In this example, the reflector 14 represents the first interface for the pump light 12 to enter the trap between the two reflectors 14, 16. In the example, an array of small apertures 20 is provided in the reflector 14. The apertures 20 allow the passage of a corresponding array of locally spatially confined pump beams 21. For clarity reasons, Fig. 2 only depicts the subsequent trajectory of one of those spatially confined pump beams 21 between the two reflectors 14, 16.

As the locally confined pump beams 21 cross the reflector 14 through the corresponding apertures 20, they quickly diverge within the space between the two reflectors 14, 16. In the example of Fig. 2 this space is filled by the heat spreader 8 and the amplification element 1. As the pump beams 21 reach the second reflector 16, which in the example of Fig. 2 can be a simple flat-mirror, they are reflected back 22 towards the first reflector 14. When the first reflection 22 reaches the first reflector 14, the pump beams have significantly diverged and only a small fraction of the power will be lost through the entry apertures 20. Most of the pump is then reflected 23 for a new passage through the amplification element 1 and towards the second reflector 16. The process is repeated several times with multiple reflections between the two reflectors 14, 16. With each passage through the amplification element 1, a fraction of the pump power is absorbed by the gain medium until all power is absorbed.

It is understood that each reflection of the pump on the first reflector 14, results in optical losses through the array of entry apertures 20. If the pump beams 12 diverge sufficiently, the fraction of optical power lost at each reflection on the first reflector 14 is roughly proportional to the ratio of total aperture surface to total reflector surface. In a possible embodiment, the apertures may be circular, with 200 µm diameters, and be distributed in a square array separated by 2 mm (center to center) from the adjacent apertures- In this case, the ratio of total aperture surface to total reflector surface results in approximately 1% of optical losses per reflection on the first reflector 14. In contrast to these small losses, in each double passage through the amplification element 1, the pump may lose ca. 10% of its power through absorption. In this manner, after several roundtrips between the reflectors 14, 16, most of the pump power will end-up transferred to the gain medium, with only a minor fraction being lost through the entry apertures 20.

Possible secondary reflections of the pump light at the interface of the heat spreader 8 and the amplification element 1 (not represented in Fig. 2) may occur without essentially affecting the mechanism of multiple reflections distributing the pump light through the amplification element 1. In fact, some level of scattering at this interface may even contribute to homogenize the pump power across the amplification element 1 and reduce the losses of pump power through the array of apertures 20.

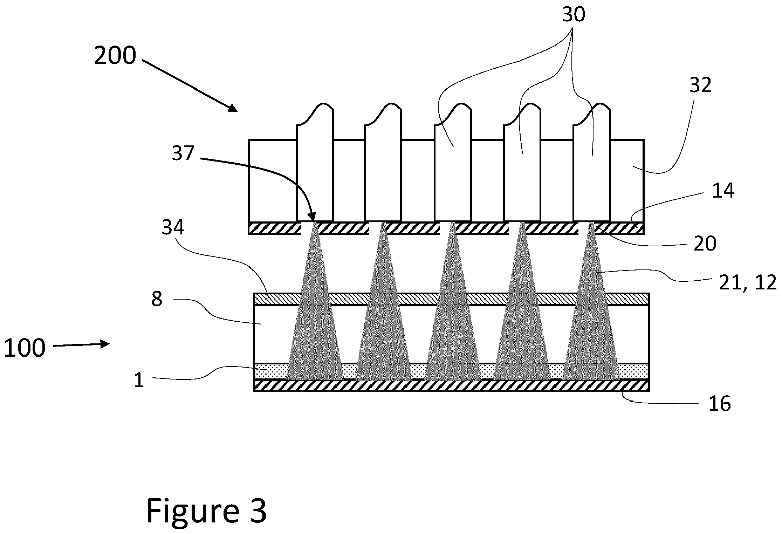

Several solutions can be conceived for providing an array of locally confined pump beams 21, micro-metrically positioned to correspond with the array of apertures 20 presented in Fig. 2. One such solution is depicted in Fig. 3.

Figure 3 represents an a example of a system according to the present invention, comprising a laser amplifier device 100 and a light source 200, which is configured to generate pump light 12 adapted to optically excite the gain medium of the amplification element 1. Here, the light source 200 comprises an array of optical fibers 30, fixed in a fixation mount 32. Each optical fiber 30 has an output face 37 generally corresponding to the core of the optical fibers 30, through which a locally confined pump beam 21 is emitted. The output faces 37 are arranged aligned in front of the apertures 20 of the first reflector 14, enabling the passage of the locally confined pump beams 21 through the first reflector 14.

The example of solution depicted in Fig. 3 is particularly advantageous, considering that high-power fiber-coupled laser diodes are commercially available nowadays, with wavelengths that correspond to the pump wavelengths of the most common laser amplification materials. A fiber solution to route the pump light from the pump laser diodes to the amplifier device 100 is extremely advantageous in terms of assembly and mechanical robustness of the system.

The optical fibers 30, may be mounted in standard ferrules or be fixed by any other known means to the fixation mount 32. At the output face 37 of the fibers 30, the pump beams 21 are spatially confined with a waist diameter roughly corresponding to the diameter of the optical core of the fibers 30. Conveniently, high-power laser diodes are commonly coupled to highly multimode fibers featuring core diameters between 100 µm and 400 µm. The output beams 21 often present a top-hat transversal beam profile and diverge rapidly with typical numerical apertures above 0.15, all of which contribute to a rapid and homogeneous distribution of the pump power after crossing the reflector 14 through the apertures 20.

If no focusing means are provided, the first reflector 14 with the apertures 20 can be conveniently arranged as close as possible to the output faces 37. In one advantageous embodiment of this solution, as illustrated in Fig. 3, the reflector 14 may be directly constructed on, or bond to a surface of the fixation mount 32, aligned with the output faces 37 of the fibers 30.

It can be worth pointing out that the reflectors 14 and 16 need not necessarily be in direct contact with the amplification element 1 or the heat spreader 8, as long as the multiple reflections of the pump 12 between the two reflectors 14, 16, undergo multiple passages through the amplification element 1, according to the invention.

Fig. 3 constitutes an example of embodiment where the first reflector 14 is physically separated from the heat spreader 8 and from the amplification element 1. In this case, the propagation of the pump beams 21 in the free space between the reflector 14 and the heat spreader 8 advantageously contributes to the expansion of the divergent pump beams through their path between the two reflectors 14, 16.

To reduce reflection losses at the heat spreader/air interface in the multiple passages that the pump beams 12 undergo between the reflectors 14, 16, the heat spreader 8 can be advantageously treated with an anti-reflection coating 34 at this interface.

In one advantageous embodiment of the example of Fig. 3, the fixation mount 32 may be actively cooled to avoid unwanted temperature build-up in the light source 200 due to residual absorption of reflected pump light.

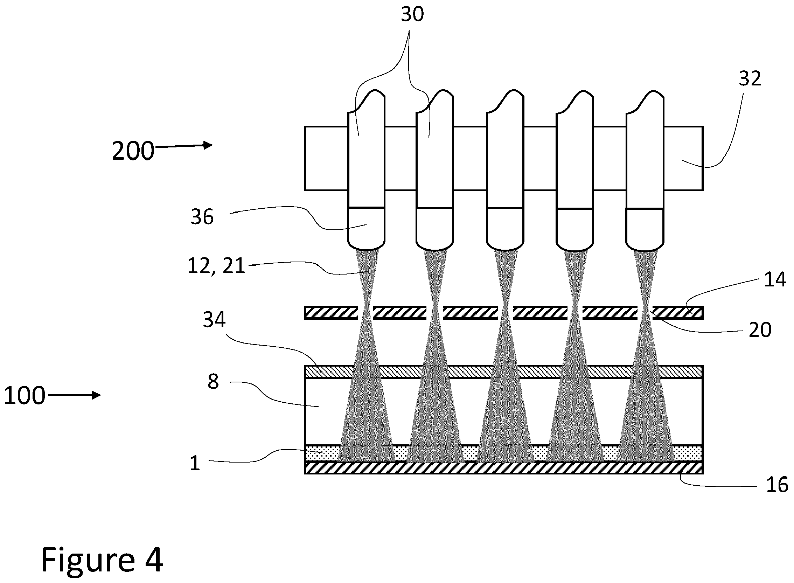

Figure 4 shows another variant of a system according to the present invention, comprising a laser amplifier device 100 and a light source 200.The light source 200 of this example also comprises optical fibers 30 delivering the pump light 12, through an array of apertures 20 in the first reflector 14. In this example, each optical fiber 30 is provided with a fiber lens 36. The fiber lenses 36, may comprise a GRIN lens, or a fiber lensed tip, or any type of short-focal lens provided in front of the fiber tip. The lenses 36 may alternatively be arranged in a micro-lenses array, which can be placed as a single element in front of the fibers 30.

In this example, the first reflector 14 will be preferably arranged at the position of the focal plane of the focused pump beams 21. The distance between said focal plane and the lenses 36 can range from few tens of microns to several millimeters or even few centimeters. The first reflector 14 could be directly constructed on, or bond to an optical element of the laser amplifier device 100; for example, to the heat spreader 8, as in the examples of Figs. 1 and 2. Alternatively, the first reflector 14 can be a self-standing part, as depicted in Fig. 4.

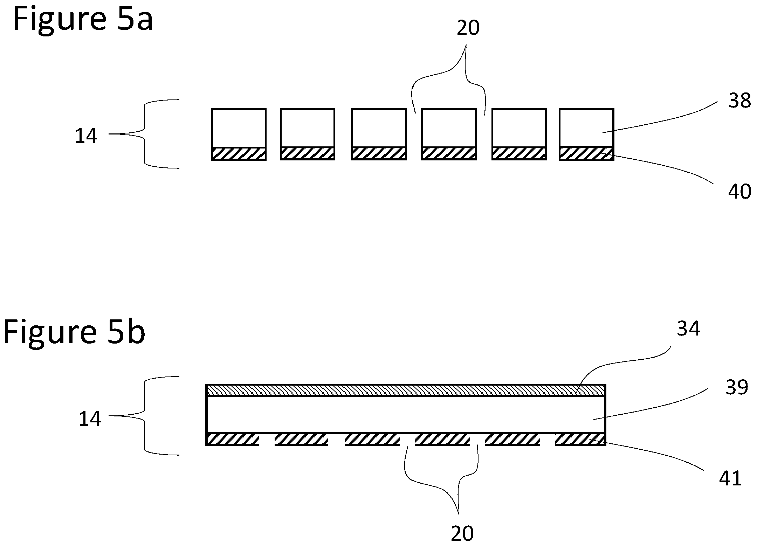

Figures 5a and 5b show two examples of how the first reflector 14, presenting an array of apertures 20 can be constructed. In the example of Fig. 5a, the reflector 14 comprises a substrate 38, coated on one side with a reflective coating 40, and the array of apertures 20 are implemented in the form of tap-holes, opened through the substrate 38. The reflective coating 40 may comprise a metallic layer or a dielectric coating; for example, a multilayer structure of dielectric materials tailored for high reflectivity at the specific wavelength of the pump light.

The implementation example of the reflector 14 in Fig. 5a has the advantage that the structure of the array of apertures 20 is directly defined by the substrate 38, which can be machined by standard precision-machining techniques, with micrometric accuracy. The reflective coating 40, may be advantageously deposited on the substrate 38 with pre-machined apertures 20.

The substrate 38 in this example of Fig. 5a does not need to be a transparent material. It can be solid enough to implement the reflector 14 as a self-standing part, as depicted in the example of Fig. 4. Alternatively, it can be a thin polymeric film, adapted to be fixed as a mask on another part of the system, for example, on the fixation mount 32 of the light source 200, as depicted in the example of Fig. 3, or directly on top of the heat spreader 8, as depicted in the example of Fig. 2.

Figure 5b shows another example of a possible constitution of the reflector 14, wherein a substrate 39 is made from a transparent material which can be crossed by the pump light without significant absorption or scattering losses. The substrate 39 also carries a reflective coating 41, but in this case, the structure of the array of apertures 20 is only implemented in the reflective coating 41. Such patterned reflective coating 41 featuring localized apertures 20, can be constructed on a substrate 39 using for example photolithography techniques as known in the field of micro-fabrication.

In some configurations of the laser amplifier device 100, for example in the embodiment of Fig. 4, it can be convenient to further provide the reflector 14 with an anti-reflection coating 34, on the side opposite to the face carrying the reflective coating 41, as depicted in the example of Fig. 5b.

It is understood that the techniques described above, allowing the fabrication of a reflective coating 41 comprising an array of apertures 20 on a transparent substrate 39, can be equally applied to fabricate such coating 41 on any specific transparent element of the laser amplifier device 100. For example, with reference to the embodiment depicted in Fig. 2, the first reflector 14 could simply consist of a highly reflective patterned coating 41 comprising the array of apertures 20, fabricated on the surface of the heat spreader 8 . In that case, the heat spreader 8 would directly fulfil the role of the transparent substrate 39 of Fig. 5b.

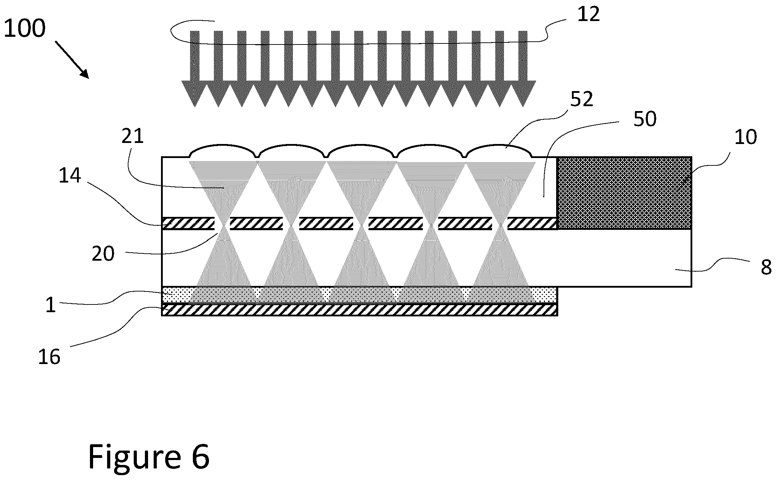

Figure 6 shows an alternative embodiment of a laser amplifier device 100 according to the invention, wherein the pump light 12 is provided as a large, collimated beam directed towards the laser amplifier device 100 perpendicularly to the main faces of the amplification element 1. A pump-focussing element 50 is provided, comprising an array of micro-lenses 52 geometrically distributed to correspond to the array of apertures 20 practiced in the first reflector 14 of the laser amplifier device 100. The term micro-lenses is used here as a generic reference to any type of miniature focusing element as known to the person skilled in the art. The array of micro-lenses 52 splits the large, collimated pump beam 12 into a plurality of focused, smaller pump beams 21 that penetrate the space between the two reflectors 14, 16 through the array of apertures 20.

In the example of Fig. 6, the pump focussing element 50 is mechanically in contact with the first reflector 14, which is also in contact from its other side with the heat spreader 8. The heat spreader 8, is further in contact with a heat sink 10, arranged on the side, to avoid blocking the pump light 12 directed towards the amplification element 1.

In this example, the pump focussing element 50 has been configured as a transparent substrate of relevant thickness, where the split pump beams 21 propagate, converging towards their corresponding apertures 20. It is understood that alternative embodiments can be contemplated, wherein the pump focussing element 50 comprises a thin substrate, or a support with tap holes where an array of small lenses can be mounted, having no physical contact with other parts of the laser amplifier device 100. The first reflector 14, could for example be provided at the upper surface of the heat spreader 8, or at the lower surface of the pump-focussing element 50, or as a self-standing part without physical contact with either the pump-focussing element 50 or the heat spreader 8.

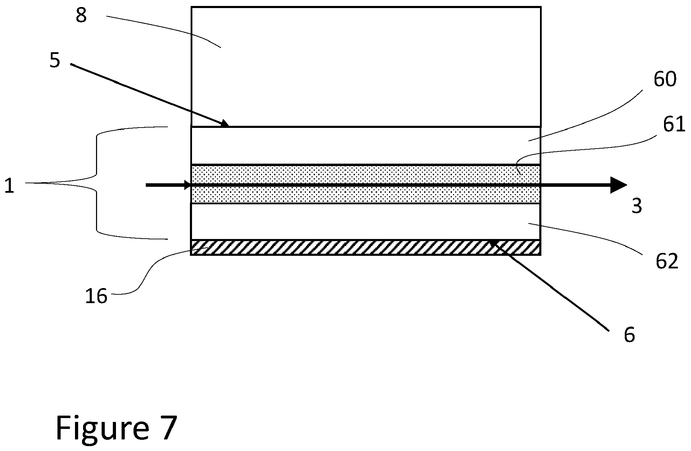

In some embodiments, the amplification element 1 may advantageously comprise several layers. One example of this is presented in Fig. 7. In this example the amplification element 1 comprises three superposed layers 60, 61 and 62. The central layer (gain medium layer) 61 constitutes the gain medium which absorbs the pump power and where the laser signal 3 gets amplified. The two surrounding layers 60, 62 are optically transparent media with a matching index of refraction, provided to reduce distortion effects resulting from the propagation of the laser signal beam 3 through the narrow space defined by the thickness of the gain medium layer 61.

Very often, the laser signal 3 which is amplified in a solid-state amplifier consists in a nearly Gaussian beam, and it is important for the intended applications that the amplified signal still conserves a nearly Gaussian profile. For example, in laser machining applications it is advantageous to have a Gaussian laser beam, since it can be more tightly focussed than beams presenting other transversal modes.

Theoretically, a Gaussian beam will propagate undistorted through a transparent medium only in the absence of any boundaries. In practice, material boundaries separated from the beam axis by a distance few times larger than the 1/e² beam width will produce a negligible distortion of said beam. There is thus an interest in providing a gain medium layer 61 sufficiently thick, to avoid significant edge distortion of the signal beam 3 at the boundaries of the gain medium. A thick gain medium layer 61 however is in contradiction with the goal to maximize the power efficiency of the amplifier. Indeed, if a large gain medium is provided, where the laser signal can propagate without interacting with the boundaries, all the pump power absorbed by the gain medium far from the optical axis is basically lost for the amplification purposes.

The composite structure of the amplification element 1 presented in Fig. 7 may represent a good solution to this problem. For example, the gain medium layer 61 may be made from a doped ceramic or crystalline material, such as Yb:YAG, Nd:YAG, Nd:YVO₄, Yb:LuO or Yb:KGW, commonly employed in laser systems. The surrounding layers 60, 62, may advantageously be made from the same ceramics as the gain medium layer 61, but without doping ions. For example, undoped YAG can be used for the surrounding layers 60, 62, when the gain-medium 61 is made from Yb:YAG. In this way, the index of refraction step at the boundaries of the gain medium layer 61 is significantly less important than in a direct gain medium / heat spreader 8 interface or gain medium / reflector 16 interface. In a thin gain medium layer 61, where the laser signal 3 propagates close to the material boundaries, a direct interface between the gain medium layer 61 and the heat spreader 8, or between the gain medium layer 61 and the second reflector 16 would result in important parasitic reflections which could be also amplified in the gain medium producing a strongly distorted beam profile at the exit of the amplifier or backround light under the form of amplified spontaneous emission or self-lasing of the amplifier.

Advantageously, the surrounding layers 60, 62 could feature a gradient concentration of doping ions (e.g., Yb³⁺) which at the interface with the gain medium layer 61 equals the doping concentration of the gain medium layer 61. The concentration of the doping ions can then progressively decay to zero from said interface with the gain medium layer 61 into the bulk of the surrounding layers 60, 62.

In another aspect, the layers 60, 61, 62 in the example of Fig. 7, are not necessarily distinct plates stacked together through a bonding process. Instead, they can be integrated in a monolithic element, e.g. YAG ceramic or YAG crystal, with a doped central portion 61, surrounded by undoped regions 60, 62.

Another important advantage of a composite structure of the amplification element 1 as presented in Fig. 7 is that it helps removing amplified spontaneous emission from the gain medium. Indeed, when the gain medium is strongly pumped, the spontaneous emission can get amplified in the gain medium, reducing the effective gain of the signal amplification process and producing an unwanted background of incoherent light around the amplified laser signal 3. This situation is only worse in a tightly confined gain medium with reflective interfaces that would tend to keep the spontaneous emission confined therein, competing with the coherent laser signal 3 for optical amplification.

Typical dimensions of a structured amplification element 1 according to the example of Fig. 7 can be in the range of sub-millimetric to few millimetres thickness for the layers 60, 61 and 62, whereas the lateral dimensions of the amplification element 1 would be in the range of several centimetres; typically between 1 cm and 10 cm; preferably between 1 cm and 2 cm.

The gain medium layer 61 preferably presents a thickness between 100 µm and 3 mm; more preferably, between 200 µm and 300 µm. The surrounding layers 60, 62 preferably present a thickness between 200 µm and 1 mm, more preferably between 200 µm and 300 µm.

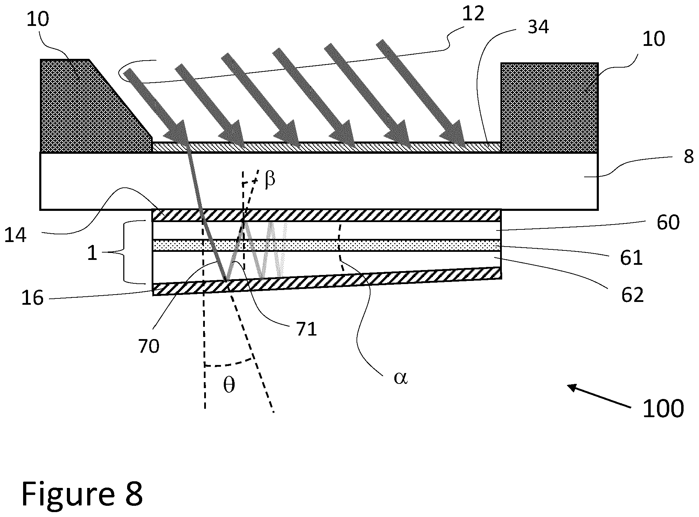

Figure 8 represents an alternative embodiment of the laser amplifier device 100, based on a different principle for trapping the pump light 12 in multiple reflections between the two reflectors 14, 16. Here the first reflector 14 is not provided with an array of apertures like in the previous examples. Instead, the first reflector 14 comprises a dielectric angle-dependent optical coating which efficiently reflects the pump light at small angles of incidence (AOI) but transmits the same light for AOI above a given threshold value (AOI_{Th}) (conventionally, AOI=0° corresponds to normal incidence). The second reflector 16 on the other hand can be a conventional wide-angle high-reflectance mirror.

A large, collimated pump beam 12 is directed towards the heat spreader 8 at an angle such that, upon reaching the first reflector 14, the collimated pump light is transmitted into the amplification element 1 with a predetermined angle of entrance (θ) which is, in this example, slightly larger than the transmission threshold value AOI_{Th}. In Fig. 8, the trajectory of one pump ray 70 has been represented to illustrate the subsequent path of the pump light in the amplifier. All angles and dimensions in the figure were adapted for illustration purposes and do not constitute a representation at scale of the actual device.

In this embodiment, the amplification element 1 presents a small wedge, defining an angle α between the first and second reflectors 14, 16, which in practice can be comprised between 1° and 10°, preferably between 1° and 5°. When the pump ray 70 is reflected on the wedged plane of the second reflector 16, it returns towards the first reflector 14 following a trajectory 71 which defines a new, other AOI (β) on the first reflector 14 which in the present example is lower than the angle of entrance θ. Provided that this new other AOI β is lower than the reflector angular threshold AOI_{Th}, the reflected beam 71 will be efficiently reflected back through the amplification element 1. Further reflections of the beam will impinge on the first reflector 14 at increasingly lower AOI and will therefore be also reflected, creating an optical trap effect.

The reflection-tilting effect of the wedge may even result at some point in a backwards lateral propagation of the rays (not represented in the figure), where the AOI starts increasingly growing in the opposite direction until the reflected rays could eventually escape from the wedge trap when the AOI exceeds again the reflector angular threshold AOI_{Th}. Obviously, the system can be dimensioned to ensure that substantially all the pump energy has been absorbed in the gain medium 61 before backward reflections can escape the wedge trap.

In another aspect of this configuration, the face of the heat spreader 8 where the pump light 12 initially impinges, can be advantageously provided with an anti-reflection coating 34 to increase the efficiency of pump transmission.

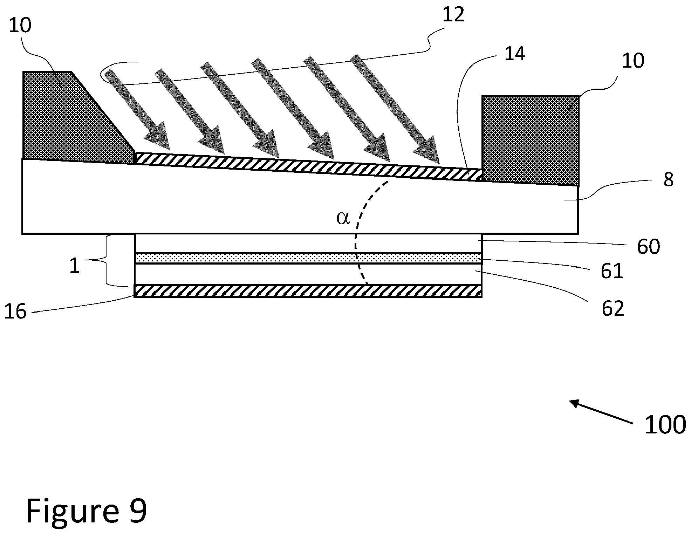

Figure 9 represents an alternative embodiment, based in the same principle of wedge-trap described above with reference to Fig. 8. Here, the first reflector 14 is provided on top of the heat spreader 8, instead of being at the interface of the amplification element 1. The amplification element 1 is configured as a slab having parallel faces, and the heat spreader 8 is a wedged element providing the necessary angle α between the reflectors 14, 16 for implementing the wedge trap.

As can be understood from the previous examples of Figs 8 and 9, the wedge trap concept can be implemented by introducing an angle in any structure between the two reflectors 14, 16, not necessarily being the amplification element 1, or the heat spreader 8, alone or in combination. Other wedged elements, or a tilt of any of the reflectors 14, 16 if they are implemented as separate parts can provide the necessary angle to create the multiple reflections according to this principle. On the other hand, implementing the reflectors 14, 16 very far apart may result in excessive lateral displacement of the reflections between them. In this sense, providing the reflectors 14, 16 at the boundaries of the amplification element 1, as in the example of Fig. 8, can be advantageous.

The strategy of angular trapping of the multiple reflections of the pump, generally requires arranging the incoming pump beam 12 at a defined angle with respect to the laser amplification device 100. This may possibly influence design aspects of the system mounting, which can be adapted by the skilled person as needed. For illustration purposes in Figs. 8 and 9, the shape of the heat sink 10 on the left side of the figures was adapted to provide a clear path for the pump beam towards the laser amplifier device 100.

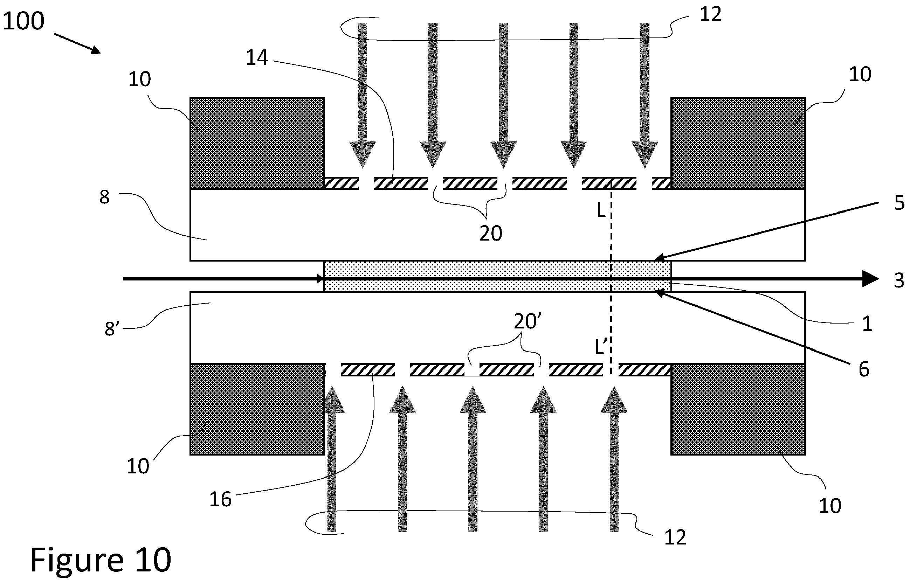

Figure 10 presents an example of embodiment where the amplification element 1 is pumped from both faces 5, 6. In this symmetric configuration, both reflectors 14, 16 are configured to allow a first entry of the pump beam 12, incident from their respective sides, into the space between the reflectors 14, 16 where multiple reflections and passages through the amplification medium 1 occur according to the invention. This can be done, for example, by providing an array of apertures 20, 20' on each reflector 14, 16, and implementing any of the strategies described above with reference to Figs. 2 to 6.

Conveniently, the arrays of apertures 20 and 20' can be laterally shifted at intercalated positions as indicated in Fig. 10 by the reference line L-L', in order to reduce direct losses of the pump light 12 through the apertures 20', 20 of the opposite reflector 16, 14.

In the example of Fig. 10, all the heat extraction from the amplification element 1 is driven through the transparent heat spreaders 8, 8' in thermal contact with each main face (respectively 5, 6) of the amplification element 1. The heat spreaders 8, 8' on both sides are also thermally connected to heat sinks 10 which may be, for example, actively cooled copper structures. The heat sinks 10 will generally not be transparent structures and must therefore be spatially arranged in a manner that leaves a clear window on the heat spreaders 8, 8' for the transmission of the pump light 12 into the laser amplifier device 100.

Many embodiments similar to the example of Fig. 10, featuring a double-sided face pumping of the laser amplifier device 100, and a double-sided heat extraction through the transparent heat spreaders 8, 8', can be conceived by combining different features disclosed in the previous examples of embodiments without departing from the scope of the present invention as defined in the claims.

The thermal contact of the amplification element 1 to a heat sink 11 (Figure 1) that does not need to be transparent, can be implemented by standard laser crystal mounting techniques; for example, with an indium foil which can be pressed and / or soldered. Likewise, the thermal contact between the heat spreader 8 and a heat sink 10 can be implemented with these standard mounting techniques.

Contacting the transparent heat spreader 8 with the amplification element 1, on the other hand, requires a pump transparent interface. This can be done with a thin layer of transparent adhesive or via bonding techniques, such as hydroxide catalysis bonding. In some cases, and depending on the materials, the deposition of an additional layer on the amplification element 1 and/or on the heat spreader 8 might be required to ensure the bonding. The nature of this additional layer depends on the materials of the amplification element 1 and the heat spreader 8. For example, the bonding of a diamond heat spreader 8 and a YAG-based amplification element 1 can be mediated by a thin (typically 1µm) layer of a transparent oxide material (SiO2, TaO2, etc) deposited on one or the two substrates that are then bonded with, for instance, hydroxide catalysis bonding.

The bonding of multiple layers 60, 61, 62 constituting in some embodiments the amplification element 1, may be done by standard composite crystals bonding techniques; for example, thermal diffusion bonding of Yb:YAG (gain medium layer 61) with YAG (surrounding layers 60, 62).

### Reference numeral used in the figures

- 1: Amplification element
- 3: Laser signal, which is amplified in the laser amplifier device
- 5: First large surface
- 6: Second large surface
- 8, 8': Heat spreader
- 10: Heat sink in contact with the heat spreader
- 11: Heat sink
- 12: Pump light
- 14: First reflector
- 16: Second reflector
- 20, 20': Small apertures
- 21: Locally spatially confined pump beams
- 22, 23: Reflections of the pump light between the two reflectors
- 30: Optical fibers
- 32: Fixation mount
- 34: Anti-reflection coating
- 36: Fiber lens
- 37: Fiber output face
- 38: Substrate
- 39: Transparent substrate
- 40: Reflective coating
- 41: Patterned reflectice coating
- 50: Pump-focusing element
- 52: micro-lenses
- 60, 62: Layers of the amplification elementsurrounding the gain medium layer
- 61: Gain medium layer
- 70, 71: Pump rays
- 100: Laser amplifier device
- 200: Light source
- α: reflector angle
- β: other AOI
- θ: angle of entrance
- L-L': alignment reference line

## Claims

1. A laser amplifier device (100) comprising:
an amplification element (1) comprising a solid-state gain medium; said amplification element (1) comprising a first main face (5) and a second main face (6) separated from each other by a distance which is smaller than the lateral dimensions of said first and a second main faces (5, 6),
a solid-state heat spreader (8) thermally connected to the first main face (5) of the amplification element (1) and substantially covering the surface of said first main face (5); the heat spreader (8) being optically transparent to a pump light (12) configured to optically excite the gain medium of the amplification element (1); said heat spreader (8) being further in thermal contact with a heat sink (10),
a first reflector (14) substantially covering and facing said first main face (5) and a second reflector (16) substantially covering and facing the second main face (6); said reflectors (14, 16) being configured to reflect said pump light (12) for at least a range of incidence angles,
**characterized in that**,
the heat spreader (8) and the first reflector (14) are arranged such that when said pump light (12) is directed towards the amplification element (1), the pump light (12) passes through the heat spreader (8) and through the first reflector (14), and
**in that** the first and second reflectors (14, 16) are configured to produce multiple reflections of said pump light (12) across the amplification element (1), between the first and second reflectors (14, 16).

2. The laser amplifier device (100) according to claim 1,
wherein the amplification element (1) comprises a gain medium layer (61) sandwiched between two surrounding layers (60, 62), the gain medium layer (61) constituting the gain medium of the amplification element (1) and the surrounding layers (60, 62) being made from a transparent material approximately matching the index of refraction of the gain medium layer (61).

3. The laser amplifier device (100) according to claim 2,
wherein the gain medium layer (61) has a thickness between 100 µm and 3 mm; preferably, between 200 µm and 300 µm, and wherein each of the surrounding layers (60, 62) has a thickness between 200 µm and 1 mm, preferably between 200 µm and 300 µm.

4. The laser amplifier device (100) according to claim 2 or 3,
wherein the gain medium layer (61) comprises a doped ceramic or crystalline material and the surrounding layers (60, 62) comprise the same undoped ceramic or crystalline material.

5. The laser amplifier device (100) according to claim 4,
wherein the material of said gain medium layer (61) comprises Yb-dopped YAG and, the material of the surrounding layers (60, 62) comprises undoped YAG.

6. The laser amplifier device (100) according to any one of claims 1 to 5,
wherein said heat spreader (8) is made of a material comprising diamond or sapphire.

7. The laser amplifier device (100) according to any one of claims 1 to 6,
wherein said first reflector (14) is not in physical contact with either the amplification element (1) or the heat spreader (8).

8. The laser amplifier device (100) according to any one of claims 1 to 7,
wherein the pump light (12) comprises an array of locally spatially confined pump beams (21); and
wherein the first reflector (14) comprises an array of small apertures (20) configured to allow the passage of said array of locally spatially confined pump beams (21) into the amplification element (1).

9. The laser amplifier device (100) according to claim 8,
wherein the first reflector (14) comprises a substrate (38) comprising an array of tap-holes defining said array of small apertures (20), said substrate (38) being coated on at least one side with a reflective coating (40).

10. The laser amplifier device (100) according to claim 8,
wherein the first reflector (14) comprises a transparent substrate (39) comprising a patterned reflective coating (41) defining said array of small apertures (20).

11. The laser amplifier device (100) according to any one of claims 1 to 7,
wherein the pump light (12) comprises a collimated beam;
the amplifier device (100) being oriented relative to the collimated beam (12) such as to provide a predetermined angle of entrance (θ) of the collimated beam (12) into the amplification element (1);
wherein the second reflector (16) makes a non-zero reflector angle (α) relative to the first reflector (14) such that the multiple reflections across the amplification element (1) occur at other angles of incidence (β) different from the predetermined angle of entrance (θ);
said first reflector (14) comprising a dielectric angle-dependent optical coating having transmitting properties for the collimated beam (12) at the predetermined angle of entrance (θ) and having reflective properties for the collimated beam (12) at said other angles of incidence (β).

12. A laser amplifier device (100) according to claim 1, further comprising:
a second solid-state heat spreader (8') thermally connected to the second main face (6) and substantially covering the surface of said second main face (6); said second heat spreader (8') being in contact with a heat sink (10) and being optically transparent to the pump light (12), wherein
the pump light (12) is further directed into the amplification element (1) through said second heat spreader (8') and through said second reflector (16).

13. A system comprising the laser amplifier device (100) according to any one of claims 1 to 12 and a light source (200) configured to generate pump light (12) adapted to optically excite the gain medium of the amplification element (1), the pump light (12) substantially covering the surface of said first main face (5).

14. The system according to claim 13,
wherein the light source (200) is configured to generate an array of locally spatially confined pump beams (21);
wherein the first reflector (14) comprises an array of small apertures (20) configured to allow the passage of said array of locally spatially confined pump beams (21) into the amplification element (1);

15. The system according to claim 14,
wherein the light source (200) comprises an array of optical fibers (30); and
wherein each optical fiber (30) comprises an output face (37) emitting one of the locally spatially confined pump beams (21), each output face (37) being aligned in front of each of said small apertures (20).

16. The system according to claim 14,
wherein the light source (200) comprises an array of micro-lenses (52) generating the array of locally spatially confined pump beams (21), the array of micro-lenses (52) being arranged to focus said locally spatially confined pump beams (21) into said small apertures (20).

17. The system according to claim 13,
wherein the light source (200) is configured to generate a collimated beam.
